# EUROPEAN PATENT APPLICATION

(11) **EP 1 143 640 A1**
(43) Date of publication of application: **10.10.2001**
(21) Application number: 99947920.7
(22) Date of filing: 15.10.1999
(51) Int. Cl.: H04B 7/26

(54) **TIME ADJUSTMENT FOR MOBILE COMMUNICATION DEVICE, AND MOBILE COMMUNICATION DEVICE**

(71) Applicant: MITSUBISHI DENKI KABUSHIKI KAISHA, Tokyo 100-8310 (JP)
(72) Inventor: MASUDA, Hiroyoshi, Mitsubishi Denki Kabushiki Kais, Chiyoda-ku, Tokyo 100-8310 (JP)
(74) Representative: Popp, Eugen, Dr.
(86) International application number: JP9905702
(87) International publication number: WO0128132

(57) **Abstract**

A mobile communication apparatus (2) according to the invention is for use in, for example, a mobile communication system. The mobile station is provided with a clock (25) for maintaining time. The mobile station transmits a time correction request command to a base station (1) for correction of the time maintained by the clock. The mobile station corrects the time maintained by the clock based on current time information transmitted from the base station. Transmission of the time correction request command is performed automatically without a user's intervention to originate a call. More specifically, upon receipt of control information transmitted from the base station via a common control channel, the mobile station automatically transmits the time correction request command to the base station. With this, extra steps for time correction are eliminated and the user does not incur extra costs.

## Description

### TECHNICAL FIELD

The present invention generally relates to a method of correcting time of an internal clock of a mobile communication apparatus for use in a mobile communication system such as a land mobile telephone system or a satellite mobile telephone system and also to a mobile communication terminal using such a method.

### BACKGROUND ART

A mobile station for use in a mobile communication system such as a land mobile communication system or a satellite mobile communication system is normally provided with a variety of functions other than the speech communication function. One of the most frequently used is a clock function capable of maintaining and displaying a time. As the time elapses, the clock may incur an error, creating a need for correction of the time.

For example, Japanese Laid-Open Patent Application No. 10-215487 discloses a technology for time correction in a mobile station. According to the technology discloses in this publication, a mobile station automatically calls a base station to establish a connection therewith in response to a time setting instruction provided by a user. Subsequently, the mobile station transmits a command requesting a current time to the base station. Upon receiving the request command, the base station returns current time information to the mobile station. The mobile station corrects the time maintained by the clock in accordance with the received current time information before disconnecting from the base station.

In the technology disclosed in the publication, however, the user is required to manually provide an instruction for time correction whenever correction of time is required. An immediate disadvantage with this technology is that a certain degree of user intervention is inevitable. Another disadvantage is that, since it is necessary to access the time signal service provided by the base station for time correction, an associated charge is incurred, forcing the user to bear extra costs.

### DISCLOSURE OF THE INVENTION

In this background, an object of the present invention is to provide a communication apparatus and a time correction method for use in the mobile communication apparatus, in which a user can correct time without being aware of the need to do so and in which no extra costs are incurred by the user.

The aforementioned object is achieved in the present invention by automatically transmitting a time correction request command, requesting current time information, from a mobile station to a base station capable of transmitting current time information via a control channel, in a predetermined timing arrangement. A time maintained by an internal clock is corrected based on the current time information transmitted in response to the time correction request command from the base station via the control cannel.

In this construction, the transmission of the time correction request command occurs automatically in a preset timing arrangement. For example, the time correction request command may be transmitted when a call incoming signal is received, when control information is received at power-on, when a predetermined period of time starts, or when a hand-off occurs. That is, the transmission of the time correction request command occurs automatically as a result of being triggered by these events.

The start of the aforementioned predetermined period of time is defined, for example, as a point of time when the mobile communication apparatus transmits the control information to the base station for registration of the location. The start of the hand-off may be defined as a point of time when the mobile communication apparatus transmits a request for hand-off to the base station when the mobile communication apparatus makes a transition to another cell.

Accordingly, the user can originate a command necessary to correct the time without being aware of the need to do so. With this, extra steps of time correction are eliminated. The user is not required to perform extra operations. By eliminating the need to pay the phone rate, extra costs are prevented from being incurred.

### BRIEF DESCRIPTION OF THE DRAWINGS

Fig. 1 is a schematic diagram showing an overall construction of a land mobile telephone system according to a first embodiment of the present invention;
Fig. 2 is a block diagram showing an internal construction of a base station and a mobile station;
Fig. 3 shows a sequence of communication between the mobile station and the base station that occurs until the mobile station is placed in a standby state;
Fig. 4 is a flowchart showing a process of transmitting a time correction request command according to a second embodiment of the present invention;
Fig. 5 is a flowchart showing a process of transmitting a time correction request command according to a third embodiment of the present invention;
Fig. 6 is a flowchart showing a process of transmitting a time correction request command according to a fourth embodiment of the present invention;
Fig. 7 is a flowchart showing a process of transmitting a time correction request command according to a fifth embodiment of the present invention;
Fig. 8 is a block diagram showing an internal construction of a base station and a mobile station according to a sixth embodiment of the present invention; and
Fig. 9 is a flowchart illustrating an operation of time correction in a mobile station according to a seventh embodiment of the present invention.

### BEST MODES FOR CARRYING OUT THE INVENTION

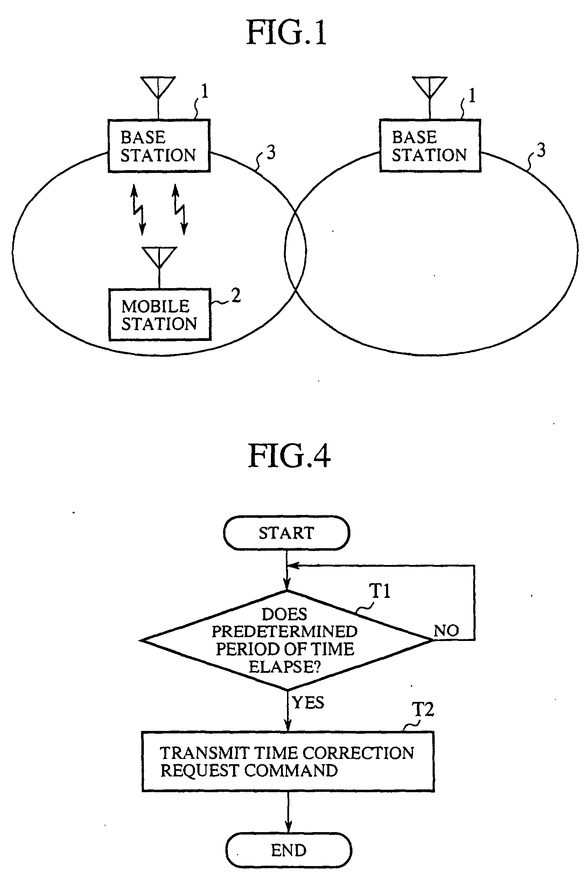

Fig. 1 is a schematic diagram showing an overall construction of a land mobile telephone system according to a first embodiment of the present invention. The land mobile telephone system may employ the time division multiple access (TDMA) method or the code division multiple access (CDMA) method. The land mobile telephone system is provided with a plurality of base stations 1 and a plurality of mobile stations 2. The base stations 1 and the mobile stations 2 exchange various radio signals. More specifically, the base station 1 covers a unique cell 3. Control signals are transmitted from the base station 1 to the mobile station 2 located in the cell 3 via a control channel. Message signals are also exchanged via a communication channel.

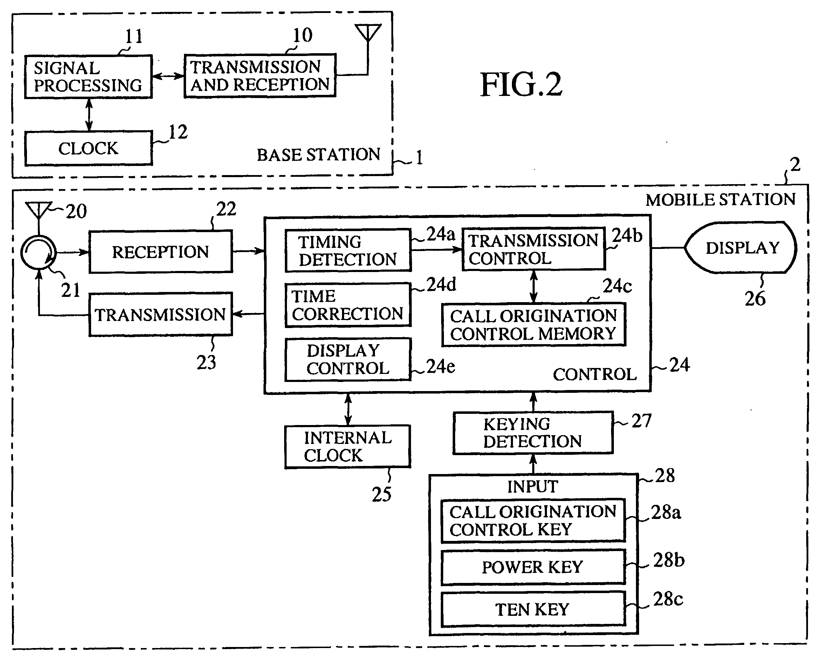

Fig. 2 is a block diagram showing an internal construction of the base station 1 and the mobile station 2. The base station 1 is provided with a transmitter and receiver 10, a signal processing unit 11 and a clock 12. The transmitter and receiver 10 transmits a radio base station signal to the mobile station 2 and receives a radio mobile station signal from the mobile station 2. The signal processing unit 11 produces the radio base station signal and recovers the contents of the radio mobile station signal. The clock 12 maintains a time in the form of YY/MM/DD (including day-of-week) and current time (hereinafter, inclusively referred to as current time). In accordance with an instruction from the signal processing unit 11, the clock 12 provides the current time to the signal processing unit 11 as current time information.

More specifically, the signal processing unit 11 provides base station control information including a base station identification number to the transmitter and receiver 10 at predetermined intervals. The transmitter and receiver 10 produces a control signal (a radio base station signal) that includes the control information. The transmitter and receiver 10 periodically broadcasts the control signal thus produced over the unique cell 3 (see Fig. 1) via a common control channel such as a perch channel.

When a response signal (a mobile station signal) includes a time correction request command, the signal processing unit 11 acquires the current time information from the clock 12. The signal processing unit 11 produces control information that includes the acquired current time information and delivers the control information thus produced to the transmitter and receiver 10. The transmitter and receiver 10 produces an ACK signal (a radio base station signal) that includes the control information thus delivered and transmit the ACK signal thus produced over the cell 3 via the common control channel.

The signal processing unit 11 forwards a message signal received from a communication apparatus not shown. The transmitter and receiver 10 transmits the forwarded signal to the mobile station 2 via the communication channel.

The base station 2 comprises a transmission and reception antenna 20, a directional coupler 21, a receiver 22 and a transmitter 23 coupled to the transmission and reception antenna 21 via the directional coupler 21, a control unit 24, an internal clock 25 for maintaining a YY/MM/DD (including day-of-week) and time (hereinafter, inclusively referred to as time), and a display implemented by, for example, a liquid crystal display, a keying detection unit 27 and an input unit 28.

The receiver 22 receives the radio base station signal transmitted from the base station 1. The receiver 22 recovers the control information and message information included in the radio base station signal and delivers the recovered information to the control unit 24. The transmitter 23 transmits the radio mobile station signal to the base station 1.

The control unit 24 is provided with a central processing unit (CPU) and executes various processes in accordance with a processing program stored in a ROM. For example, the control unit 24 automatically executes a power-on initialization process, a time correction process and a display process in accordance with the processing program.

The control unit 24 comprises a function block responsible for the initialization process. More specifically, the control unit 24 is provided with a timing detection unit 24a effecting timing detection and a transmission control unit 24b effecting transmission control. The transmission control unit 24b effects the transmission control function using a transmission control memory 24c for storing information for on/off control of origination of a command requesting the time. A more detailed description will be given later.

The control unit 24 comprises a time correction unit 24d responsible for the time correction process. The time correction unit 24d corrects the time maintained by the internal clock 25, based on the current time information transmitted from the base station 1 and received by the receiver 22.

The control unit 24 also comprises a display control unit 24e responsible for the display process. The display control unit 24e displays the time maintained by the internal clock 25 on a display 26. The display control unit 24e also displays the time after correction on the display 26.

The keying detection unit 27 detects a key input provided via an input unit 28 and delivers the detected key input to the control unit 24. The input unit 28 is provided with keys that enable a user to input information. For example, the input unit 28 is provided with a call origination control key 28a for requesting a time correction request command to be turned on or off. Also provided is a power key 28b and a ten key 28c.

The call origination control memory 21c of the control unit 24 is implemented by, for example, an electrically erasable programmable read only memory (EEPROM) that stores call origination on/off information indicating whether origination of the time correction request command is permitted or prohibited. The call origination on/off information is retained even when the mobile station 2 is turned off and is updated under the control of the control unit 24.

Upon receiving a keying detection signal from the keying detection unit 27, the control unit 24 executes various processes in response to the keying detection signal. For example, when a keying output corresponding to the call origination control key 28a is delivered by the keying detection unit 27 while the call origination control memory 24c is in an off state, the control unit 24 sets the call origination control memory 24c to an on state. When a keying output corresponding to the call origination control key 28a is given while the call origination control memory 24c is in an on state, the control unit 24 sets the call origination control memory 24c to an off state.

The timing detection unit 24a times the transmission of the time correction request command by outputting an associated timing detection signal. More specifically, the timing detection unit 24a ensures that the reception by the receiver 22 of a control signal transmitted from the base station 1 via the common control channel concurs with the transmission of the time correction request command. The timing detection unit 24a provides a timing detection signal indicating that the transmission timing is detected to the transmission control unit 24b.

In response to the timing detection signal from the timing detection unit 24a, the transmission control unit 24b transmits the time correction request command and other necessary control information. More specifically, in response to the timing detection signal from the timing detection unit 24a, the transmission control unit 24b produces a frame that includes the time correction request command and the control information such as a mobile station identification number. The frame thus produces is delivered to the transmitter 23. The transmitter 243 produces a modulated radio mobile station signal, based on the frame. The radio mobile station signal is transmitted to the base station 1 via the directional coupler 21 and the transmission and reception antenna 20.

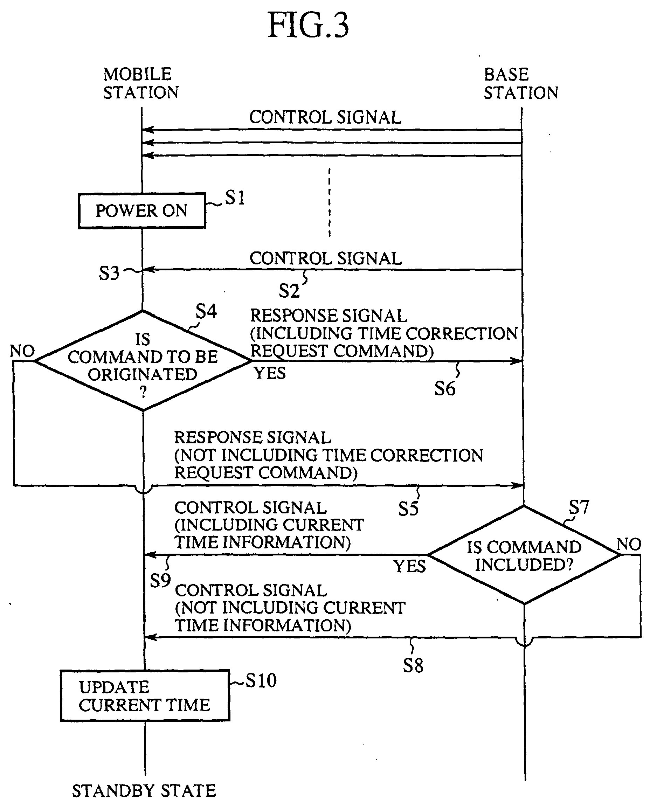

Fig. 3 shows a sequence of communication that takes places between the base station 1 and the mobile station 2 beginning with a power-on and ending in a stand-by state. When the user presses the power key 28b while the power of the mobile station 2 is not turned on, the control unit 24 of the mobile station 2 executes the initialization process automatically. As a result of this, the mobile station 2 is brought to a stand-by state.

When the user presses the ten key 28c, keys in a telephone number and presses a call origination key (not shown), the mobile station 2 originates call to the base station 1 so that the call is started after the circuit is established. That is, the user is billed for the phone rate only after the telephone number is input. The phone rate is not incurred in a stand-by state or merely by turning the power on. That is, the communication sequence shown in Fig. 3 does not require a phone rate.

When the power is turned on (S1), the receiver 22 of the mobile station 2 receives the control signal periodically transmitted from the base station 1 via the common control channel (S2). The receiver 22 recovers the control information contained in the control signal and delivers the recovered control information to the control unit 24. The timing detection unit 24a detecting the control information (S3) provides the timing detection signal to the transmission control unit 24b. The transmission control unit 24 provided with the timing detection signal automatically accesses the call origination control memory 24c so as to determine whether the transmission of the time correction request command is designated (S4).

When it is determined that the transmission of the command is not designated (NO of S4), the transmission control unit 24b produces a response signal that includes control information such as a mobile station identification signal but does not include the time correction request command. The response signal thus produced is transmitted to the base station 1 (S5). When the transmission of the command is designated (YES of S4), the transmission control unit 24b produces a response signal that includes the time correction command and the control information and returns the response signal thus produced to the base station 1 via the transmitter 23 (S6).

Thus, when the transmission of the command is designated, the mobile station 2 transmits the response signal including the time correction request command to the base station 1 in response to the control information periodically transmitted from the base station 1.

The base station 1 receiving the response signal recovers the mobile station identification number included in the response signal and registers the location of the mobile station 1 in a home station (not shown). The base station 1 also determines whether the response signal includes the time correction request command (S7).

If it is determined that the time correction request command is not included in the response signal (NO of S7), the base station 1 transmits the radio base station signal (ACK signal) not including the current time information but including reception acknowledgement information to the mobile station 1 (S8). If it is determined that the time correction request command is included (YES of S7), the base station 1 reads the current time information from the clock 12 so as to produce the radio base station signal that includes the current time information and the reception acknowledgement information. Subsequently, the base station 1 transmits the radio base station signal to the mobile station 2 (S9).

When the radio base station including the current time information is received by the receiver 22, the time correction unit 24d in the mobile station 2 corrects the time maintained by the internal clock 25 with the current time received (S10). The display control unit 24e displays the current time after correction on the display 26. When the current time is corrected, the mobile station 2 is brought to a stand-by state.

As described, according to the first embodiment, the mobile station 2 is configured to transmit the time correction request command in response to the reception of the control information transmitted from the base station 1 at power-on of the mobile station 2. Accordingly, the user of the mobile station 2 can place a request for time correction without being aware of the need to send the time correction request command. Consequently, the usability of the mobile station 2 is improved. Since the time correction request command is received via the common control channel that does not require the phone rate, the user is not billed for the extra phone rate. Thus, the price of mobile telephone service is maintained at a reasonable level.

The provision for user intervention of the on/off control of the origination of the time correction request command proves particularly useful when the use does not want time correction to be preformed without the consent of the user.

In the illustrated example, the user is capable of the on/off control of the origination of the time correction request command. When time correction is required without exception, the provision for user selection of the origination of the time correction request command may be eliminated so that the time correction request command is always transmitted at power-on. According to this construction, it is not necessary to provide the call origination control memory 24c so that the construction of the control unit 24 is simplified. The call origination control key 28a is also unnecessary so that the construction of the input unit is simplified. Since it is not necessary to differentiate between the designation of command origination and failure thereof, the process performed by the control unit 24 is simplified.

### Second embodiment

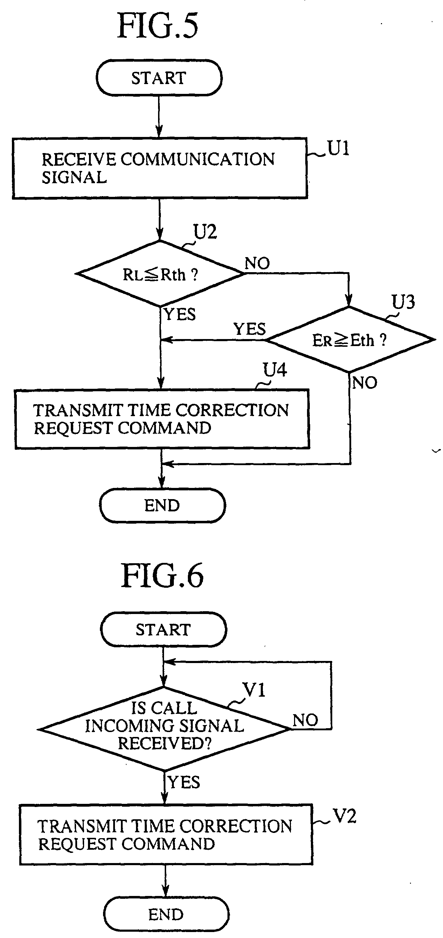

Fig. 4 is a flowchart showing a process for transmitting a time correction request command according to a second embodiment of the present invention.

In the first embodiment, the time correction request command is transmitted in response to the reception of the control signal at power-on from the base station 1 via the common control channel. In contrast, according to the second embodiment, the time correction request command is transmitted at the start of a predetermined period of time in a stand-by state.

More specifically, the timing detection unit 24a of the control unit 24 determines whether the predetermined period of time starts in a stand-by state subsequent to power-on (step T1). The predetermined period of time is defined, for example, for transmission to the base station 1 of the control information such as a mobile station identification number required for registration of the mobile station 2. When it is determined that the predetermined period of time starts (step T2), timing detection unit 24a transmits the timing detection signal to the transmission control unit 24b.

In response to the timing detection signal, the transmission control unit 24b produces a frame that contains the time correction request command and the control information so as to provide it to the transmitter 23 (step T2). The transmitter 23 transmits the radio mobile station signal that includes the frame to the base station 1 via the control channel.

As described, the second embodiment enables the user of the mobile station 2 to send the time correction request command to the base station 1 without being aware of the need to originate time correction request command. Accordingly, the usability of the mobile station 2 is improved and the user is not billed for the extra phone rate.

### Third embodiment

Fig. 5 is a flowchart showing the transmission of the time correction request command according to a third embodiment of the present invention.

In the second embodiment, the time correction request command is transmitted in response to the detection of the start of the predetermined period in a stand-by state. In contrast, the third embodiment ensures that the time correction request command is transmitted in response to the detection of a hand-off timing.

When the mobile station 2 moves to a another cell while a call is proceeding, a hand-off operation is carried out so that a circuit is established with respect to the base station 1 in a destination cell. It is necessary for the mobile station 2 to transmit control information including hand-off request information to the base station 1. According to the third embodiment, the time correction request command is transmitted when the control information is transmitted.

More specifically, when the receiver 22 receives a message signal from the base station 1 via a communication channel (step U1), the receiver 22 provides the message information included in the message signal to the control unit 24. The timing detection unit 24a of the control unit 24 monitors the quality of reception of the message information and determines whether the quality of reception dropped. More specifically, the timing detection unit 24a detects a reception level R_{L} and a reception error rate E_{R}. The timing detection unit 24a determines whether the reception level R_{L} is below a predetermined threshold level Rₜₕ (step U2) or whether the reception error rate E_{R} exceeds a predetermined threshold level Eₜₕ (step U3).

If one of the above conditions is met (step U2 or YES of step U3), the timing detection unit 24a provides the timing detection signal to the transmission control unit 24b. In response to the timing detection signal, the transmission control unit 24b transmits the time correction request command (step U4). More specifically, the transmission control unit 24b produces a frame that contains the time correction request command and the control information including the hand-off request information. The transmission control unit 24b delivers the frame thus produced to the transmitter 23. The transmitter 23 transmits the radio mobile station signal including the frame to the base station 1 via the control channel.

As described, the third embodiment ensures that the user of the mobile station 2 can request correction of time without being aware of the need to originate the time correction request command. Therefore, the usability of the mobile station 2 is improved and the user does not incur the extra phone rate.

### Fourth embodiment

Fig. 6 is a flowchart showing the transmission of the time correction request command according to a fourth embodiment of the present invention.

In the third embodiment, the transmission of the time correction request command is timed to concur with the hand-off. In contrast, the fourth embodiment ensures that the time correction request command is transmitted in response to the reception of a call incoming signal from the base station 1.

When the call incoming signal is received, it is necessary for the mobile station 2 to transmit the control information such as the mobile station identification number to the base station 1 for establishment of a circuit. In the third embodiment, the time correction request command is transmitted when the control information is transmitted.

More specifically, when the call incoming signal is received from the base station 1 via a call channel (step V1), which is a form of the control channel, the receiver 22 notifies the control unit 24 of the reception of the call incoming signal.

In response to this notification, the timing detection unit 24a in the control unit 24 provides the timing detection signal to the transmission control unit 24b. In response to the timing detection signal, the transmission control unit 24b transmits the time correction request command (step V2). More specifically, the transmission control unit 24b produces a frame that contains the time correction request command and control information such as the mobile station identification number. The transmission control unit 24b provides the frame thus produced to the transmitter 23. The transmitter 23 transmits the radio mobile station signal including the frame to the base station via the control channel.

As described, the fourth embodiment allows the user of the mobile station 2 to request correction of time without being aware of the need to originate the time correction request command. Accordingly, the usability of the mobile station 2 is improved and the user does not incur the extra phone rate.

### Fifth embodiment

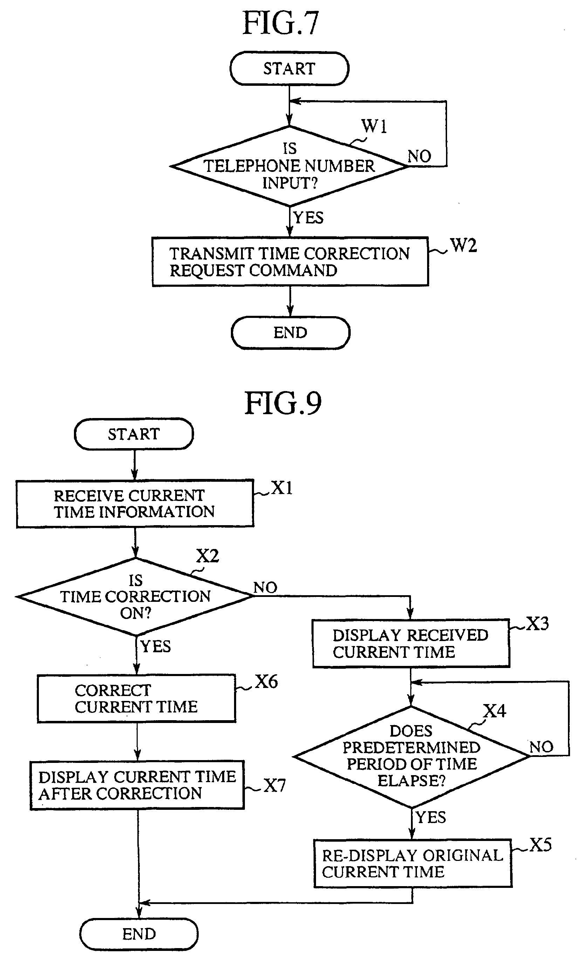

Fig. 7 is a flowchart showing the transmission of the time correction request command according to a fifth embodiment of the present invention.

In the fourth embodiment, the time correction request command is transmitted in response to the reception of the call incoming signal. In contrast, the fifth embodiment ensures that the time correction request command is transmitted when a call is placed to a communication unit other than the base station 1 that transmits the time information.

The user of the mobile station 2 normally places a call to another mobile station or to a communication unit accommodated in another mobile communication system. In this case, the user inputs a telephone number by pressing the ten key 28c. The phone rate is incurred when a call is established. In the fifth embodiment, the time correction request command is transmitted when the user has to provide an input and incur the phone rate.

More specifically, the timing correction unit 24a stores the identification number of the base station 1 that transmits the time information and determines whether a telephone number (identification information) other than the identification number stored is input via the ten key 28c of the input unit 28 (step W1). When a telephone number other than the identification number stored is input, the timing detection unit 24a provides the timing detection signal to the transmission control unit 24b.

In response to the timing detection signal, the transmission control unit 24b transmits the time correction request command signal (step W2). More specifically, the transmission control unit 24b produces a frame that includes the input telephone number and the time correction request command. The transmission control unit 24b provides the frame thus produced to the transmitter 23. The transmitter 23 transmits the radio base station signal including the frame to the base station 1.

As described, according to the fifth embodiment, the user can request time correction without being aware of the need to originate the time correction request command. Accordingly, the usability of the mobile station 2 is improved and the user does not incur the extra phone rate.

### Sixth embodiment

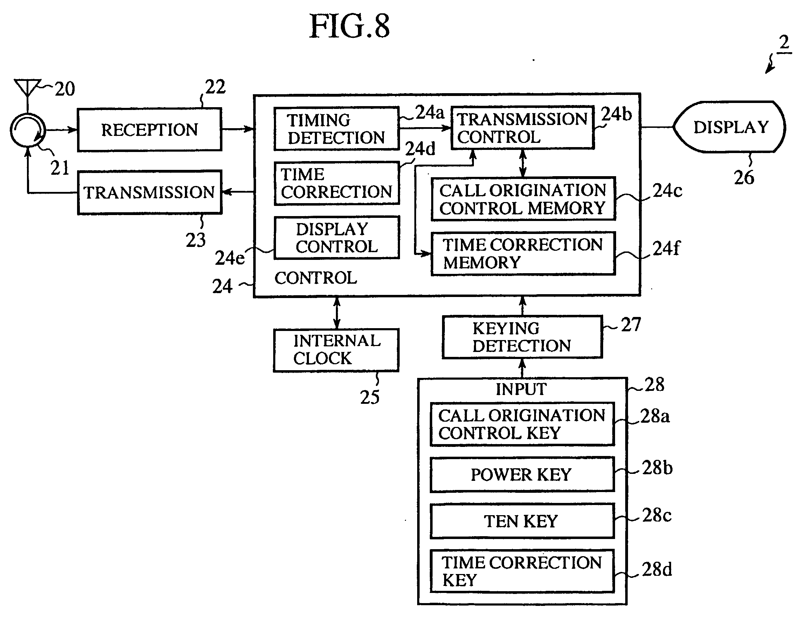

Fig. 8 is a block diagram showing the internal construction of the mobile station 2 according to a sixth embodiment of the present invention. Those components that are identical to the corresponding components of Fig. 2 are designated by the same reference numerals so that the description thereof is omitted.

In the first through fifth embodiments, the mobile station 2 corrects the time unconditionally when the time information is transmitted from the base station 1. In contrast, according to the sixth embodiment, the time may not be corrected if so desired by the user, even when the time information is received from the base station 1.

The user may travel to a destination where there is a time difference. When the user places a call from a destination of travel to where the user was located before the travel, the user may want the current time at the original location to be retained in the clock 25 of the mobile station 2. The user may also want to know the current time of the destination of travel. In this case, the time indicated by the current time information transmitted from the base station 1 of the destination of travel may temporarily be displayed on the display 26, while the clock 25 is prevented from being updated. With this, the user can confirm both the current time of the destination of travel and the current time of the original location on the display 26.

According to the sixth embodiment, the input unit 28 of the mobile station 2 is provided with a time correction key 25d. In response to a keying output signal from the time correction key 25d, the keying detection unit 27 provides the keying output signal to the control unit 24. The control unit 24 is provided with a time correction memory 24f. The time correction memory 4f is implemented, for example, by an EEPROM that stores information indicating whether the time correction is required.

In response to the reception of the keying output signal corresponding to the time correction key 25d, the control unit 24 inverses the state of the time correction memory 24f. More specifically, when the time correction memory 24f stores information indicating that the time correction is turned off, the control unit 24 switches the contents of the memory so that the information indicating that the time correction is turned on is stored. When the time correction memory 24f stores information indicating that the time correction is turned on, the control unit 24 switches the contents of the memory so that the information indicating that the time correction is turned off is stored.

Fig. 9 is a flowchart showing a process of time correction after the time information is received by the mobile station 2. Upon receipt of the current time information from the receiver 22 (step X1), the time correction unit 24d in the mobile station 2 accesses the time correction memory 24f so as to determine whether the contents of the time correction memory 24f indicates that the time correction is turned on (step X2).

If it is determined that the contents of the time correction memory 24f indicates that the time correction is turned off (NO of step X2), the time correction unit 24d does not correct the time maintained by the internal clock 25. In this case, the display control unit 24e temporarily extinguishes the display of time on the display 26 and substitutes therefor the time indicated by the current time information (step X3).

Subsequently, the display control unit 24e maintains the current time display for a predetermined period of time. More specifically, the display control unit 24e determines whether a predetermined period of time Δt (for example, Δt=5 (sec)) elapses since the display of the time indicated by the current time information is started (step X4). If it is determined that the predetermined period of time Δt does not elapse (NO of step X4), the display control unit 24e maintains the current time display. If it is determined that the predetermined period of time Δt elapses (YES of step X4), the display control unit 24e extinguishes the display of current time so as to re-display the maintained time (step X5).

If the contents of the time correction memory 24f indicates that the time correction is turned on (YES of step X2), the time correction unit 24d corrects the time maintained by the internal clock 25 to the time indicated by the current time information (step X6). In this case, the display control unit 24e extinguishes the display of time on the display 26 and substitutes therefor the time after correction on the display 26 (step X7).

As described, according to the sixth embodiment, the current time indicated by the current time information is only temporarily displayed when the time correction is indicated as being turned off. The embodiment is particularly useful when the time originally maintained is to be retained.

By allowing the user to turn the time correction on or off, the display may be updated to keep showing the local time at the destination of travel, if for some reason the current time at the original location is not needed. Thereby, the manual time correction at the destination of travel is not necessary. Thus, the mobile station 2 in which the usability is improved is provided.

In the above description, the time correction may be turned on or off. When it is considered that the simplification of the construction is more important than the improvement in the service provided to the user, the current time maintained may always be updated when the current time is received.

With this construction, the time correction memory 24f is unnecessary so that the construction of the control unit 24 is simplified. The time correction key 25d is also unnecessary so that the construction of the input unit 28 is simplified. By eliminating the need to determine whether the time correction is turned on or off, the process of the control unit 24 is simplified.

In the description given above, the time correction memory 21b is provided to store an instruction indicating whether or not the time correction is required. Alternatively, the time correction memory 21b may be eliminated so that the user is prompted for confirmation of the need for time correction every time the time information is received.

More specifically, upon receipt of the time information, the control unit 24 displays a message on the display 26 asking the user whether the time correction is required. Subsequently, the control unit 24 determines whether the time correction key 25d is pressed. If it is determined that the time correction key 25d is pressed, the time correction unit 24d corrects the time maintained by the internal clock 25 with the time indicated by the current time information. The display control unit 24e displays the time after correction on the display 26.

If the time correction key 25d is not pressed for a predetermined period of time, the time correction unit 24d does not correct the time maintained by the internal clock 25. The display control unit 24e displays the time indicated by the current time information. When the predetermined period of time Δt elapses, the maintained time is displayed again.

According to this construction, the user is asked whether the time correction is necessary every time the time information is received. Accordingly, a disadvantage associated with the time correction without the user's consent is eliminated. That is, in the above-described construction where the user is not asked whether the time correction is necessary, the user may forget that the time correction is indicated as being necessary when actually the time correction is not necessary. Elimination of the time correction memory 24f has an advantage in that the construction of the control unit 24 is simplified.

### Other embodiments

The present invention is not limited to the above-described embodiments. In the foregoing embodiments, the time correction request command is transmitted, for example, upon receipt of the control signal from the base station 1 at power-on. The time correction request command is transmitted using the control channel in which the control signal is transmitted. Alternatively, the time correction request command may be transmitted via a dedicated control channel according to a predetermined timing arrangement.

In the foregoing embodiments, the current time information to be transmitted to the mobile station 2 is maintained in the base station 1. Alternatively, however, a central control office connected to a plurality of base stations 1 may maintain the current time so that the current time is delivered to the base stations 1 at short intervals. In this construction, the mobile stations 2 in an area of the same time zone can share the current time so that the reliability of the update of the current time is improved. Further, the construction of the base station is simplified.

In the foregoing embodiments, the invention is described as being suitably used in the land mobile telephone system. However, the invention is readily applicable to the satellite mobile telephone system. In this case, the mobile station transmits the time correction request command to a land station via a communications satellite. The land unit transmits data such as the current time via the communications satellite. The delay incurred in transmitting data such as the current time is approximately 250 msec and does not present a substantial problem when synchronization on the order of a second is required.

## Claims

1. A time correction method for mobile communication system **characterized by** comprising the steps of:
automatically transmitting a time correction request command from a mobile station (2) in a preset timing arrangement, so as to request current time information from a base station (1), which transmits control information via a control channel; and
automatically correcting a time maintained by an internal clock (25) of the mobile station based on the current time information transmitted via the control channel in response to the time correction request command.

2. The time correction method according to claim 1, **characterized in that** the time correction request command is automatically transmitted upon receipt of the control information at power-on of the mobile station.

3. The time correction method according to claim 1, **characterized in that** the time correction request command is automatically transmitted in a stand-by state when a predetermined period of time is started.

4. The time correction method according to claim 1, **characterized in that** the time correction request command is automatically transmitted when a hand-off of the mobile station occurs.

5. The time correction method according to claim 1, **characterized in that** the time correction request command is automatically transmitted when a call incoming signal is received by the mobile station from the base station.

6. The time correction method according to claim 1, **characterized in that** the time correction request command is automatically transmitted when there is an input of identification information identifying a communication unit other than the base station responsible for transmission of the current time information.

7. A mobile communication apparatus **characterized by** comprising:
a transmission control unit (24b) for automatically outputting a time correction request command requiring for requesting current time information from a base station (1), which transmits control information via a control channel, in a predetermined timing arrangement;
a transmitter (23) for transmitting the time correction request command output from said transmission control unit to the base station;
a receiver (22) for receiving the current time information transmitted from the base station via the control channel, in accordance with the time correction time request command; and
a time correction unit (24d) for correcting a time maintained by an internal clock (25) based on the current time information output from said receiver;

8. The mobile communication apparatus according to claim 7, **characterized by** further comprising:
an input unit (28) receiving an input of information indicating whether transmission of the time correction request command is permitted or prohibited, wherein
said transmission control unit controls the transmission of the time correction request command in accordance with the information input via said input unit.

9. The mobile communication apparatus according to claim 7, **characterized by** further comprising:
an input unit (28) receiving an input of information indicating whether or not time correction based on the current time information received by said receiver from the base station is necessary, wherein
said time correction unit (24d) corrects the time maintained by the internal clock only when the information indicating that the time correction is necessary is input via said input unit,
when the information indicating that the time correction is not necessary is input via said input unit, a current time indicated by the current time information is displayed on a display for a predetermined period of time followed by a display of the time maintained by the internal clock, and
when the information indicating that the time correction is necessary is input via said input unit, the current time output from said time correction unit is kept being displayed on the display.
